# EUROPÄISCHE PATENTSCHRIFT

(11) **EP 0 712 574 B1**
(45) Veröffentlichungstag und Bekanntmachung des Hinweises auf die Patenterteilung: **29.03.2000**
(21) Anmeldenummer: 95117109.9
(22) Anmeldetag: 31.10.1995
(51) Int. Cl.: A01N 1/00

(54) **Verwendung von D,L-alpha-Liponsäure, ihren Enantiomeren, und/oder ihren Derivaten als Zusatz bei Erythrozyten-Flüssig und -Kryokonserven für homologe und autologe Erythrozytenkonzentrate**
Use of D,L-alpha-lipoic acid, its enantiomers and/or its derivatives as additive for erythrocyte liquid preserves and cryopreserves for homologous and autologous erythrocyte concentrates
Utilisation de l'acide alpha lipoique, ses énantiomères et/ou ses dérivées comme additif des érythrocytes conserves liquides et cryoconserves pour concentrats des erythrocytes homologues et autologues

(30) Priorität: 08.11.1994 DE 4439480
(43) Veröffentlichungstag der Anmeldung: 22.05.1996
(73) Patentinhaber: ASTA Medica Aktiengesellschaft, 01277 Dresden (DE)
(72) Erfinder: Conrad, Frank, Dr., D-65933 Frankfurt (DE); Henrich, Hermann-August, Prof. Dr., D-97082 Würzburg (DE); Geise, Wolfgang, Dr., D-97241 Dipbach (DE); Ulrich, Heinz, Dr., D-63843 Niedernberg (DE)
(74) Vertreter: Decker, Karl-Ludwig

(56) Entgegenhaltungen:
- EP-A- 0 382 066
- EP-A- 0 564 880
- US-A- 5 248 506
- US-A- 5 250 303
- BIOCHEM. & MOLEC. BIOL. INTERN., Bd. 33, Nr. 4, Juli 1994, Seiten 669-679, XP002018893 A. CONSTANTINESCU, H. TRITSCHLER & L. PACKER: "Alpha-Lipoic acid protects against hemolysis of human erythrocytes induced by peroxyl radicals."
- J. BIOL. CHEM., Bd. 268, Nr. 15, 25.Mai 1993, Seiten 10906-10913, XP002018894 A. CONSTANTINESCU, D. HAN & L. PACKER: "Vitamin E recycling in human erythrocyte membranes."

## Beschreibung

α-Liponsäure wird chemisch als 1,2-Dithiolan-3-Pentansäure 5-(1,2-dithiolan-3-yl)-Valeransäure 5-3-(1,2-Dithioanyl)-Pentansäure bezeichnet. Die α-Liponsäure besitzt ein chirales C-Atom und tritt in zwei enantiomeren Formen auf und kommt physiologisch in Planzen, in Bakterien sowie im Säugerorganismus vor. Sie besitzt die Funktion eines Coenzyms in mitochondrialen Multienzymkomplexen wie z.B. den der Pyruvatdehydrogenase, der α-Ketoglutaratdehydrogenase und der Dehydrogenase der verzweigtkettigen Aminosäuren. Im Stoffwechsel kann die α-Liponsäure von der oxidierten Form (Disulfidbrücke) in die reduzierte Dihydroform mit zwei freien SH-Gruppen überführt werden. Beide Formen haben eine ausgeprägte antioxidative Wirkung (z.B. Kuklinski et al., Z.Geriatrie, 4, S. 224-246, 1991; Packer, Diabetologia 36, S. 1212-1213, 1993). Das Redoxpaar Dihydroliponsäure/α-Liponsäure besitzt zudem metallchelatierende Eigenschaften. Neuerdings wird auch ein Einfluß der α-Liponsäure auf den Glukosetransport untersucht (Bashan et al., Einfluß von Thioctsäure auf den Glukosetransport. In: Stellenwert von Antioxidantien beim Diabetes mellitus Hrsg.: Gries, F.A. und Wessel, K., pmi Verlagsgruppe, S. 211-217, 1993). In der Bundesrepublik Deutschland wird α-Liponsäure seit 1966 als Arzneimittel zur Behandlung von Lebererkrankungen, bei Pilzvergiftungen sowie bei peripheren Polyneuropathien angewendet. Weitere Verwendungen sind in der EP 0 382 066 A2 beschrieben. Außerdem ist bekannt, daß α-Liponsäure vor Hämolyse schützt, siehe A. Constantinescu et al., Biochem. & Molec. Bio. Intern., Bd. 33, Nr. 4, S. 669-679, 1994, und A. Constantinescu et al., J. Biol. Chem., Bd. 268, Nr. 15, S. 10906-10913, 1993.

Weiterhin sind für die Lagerung von Erythrozyten in der US 5,250,303 A die Verwendung von Pufferlösungen sowie in der US 5,248,506 A und der EP 0 564 880 A1 plasmafreie Lagerungsmedien offenbart.

Blutkonserven für die klinische Anwendung werden gemäß **Richtlinien des BGA** (s. Bekanntmachung des BGA, Bundesgesundheitsblatt 2/92, Richtlinien zur Blutgruppenbestimmung und Bluttransfusion), der **Amerikanischen Guidelines** (s. Standards for Blood banks and Transfusion services, 14th Edition 1991, by Standards Committe, American Association Of Blood Banks, Virginia) hergestellt.

Die verschiedenen **Blutkonservenarten** werden nach Richtlinien verschiedener Konsensustreffen (s. Arzneimittelbrief, Hrsg. Herrath, D. von und Thimme, W.: Therapie mit Blut- und Blutbestandteil-Konserven, Jahrg 28, Nr. 7, Juli, S. 49-52, 1994) folgendermaßen beschrieben:
1. Zellhaltige Blut- und Blutbestandteilskonserven wie: Blutkonserve, Frischblutkonserve, **Erythrozytenkonzentrat,** Gewaschenes Erythrozytenkonzentrat, Leukozytenarmes Erythrozytenkonzentrat, Leukozytenfreies Erythrozyten-konzentrat, **Tiefkühlkonserviertes Erythrozythenkonzentrat,** Thrombozytenreiches Plasma, Thrombozytenkonzentrat, Leukozytenkonzentrat
2. Plasma und Plasmafraktionen: hier nicht zutreffend

**Erythrozytenkonzentrate** sind Blutkonserven, aus denen das Plasma weitgehend entfernt wurde. Sie sind heute das Standardpräparat zur Erythrozytensubstitution z.B. bei akutem Blutverlust und chronischer Anämie (Welch, G., et al., Ann. Int. Med., 116, S. 393, 1992). Gewaschene Erythrozytenkonzentrate sind leukozytenarm (<1,2x10⁹ je Konserve) und werden bei Patienten mit IgA-Mangelsyndrom und IgA-Anti-körpern, bei autoimmunhämolytischer Anämie mit Komplement-beteiligung und bei paroxysmaler nächtlicher Hämoglobobinurie eingesetzt (seltener). **Kryokonservierte Blutkonserven** gelten nach Auftauen und Entfernen des Gefrierschutzmittels als leukozytenfrei und betreffen die selben Indikationen wie die Erythrozytenkonzentrate.

Die optimalen **Lagerungsbedingungen** werden nach o.g. Richtlinien geregelt (Stangel W., 1988), wobei die erforderlichen Mindestanforderungen hier definiert werden. Die Lagerungszeiten werden in Abhängigkeit vom Herstellungsverfahren vom Hersteller durch das Verfallsdatum angegeben. Die Lagerung erythrozyten-haltiger Blutkonserven ist temperaturabhängig, sollten im Laufe von 30-60 Minuten zur Kühlung gelangen und zeigen bei einer Verzögerung der Kühlung um 6 Stunden einen Verlust an 2,3-DPG. Als Zwischenprodukt der Glykolyse liegt 2,3-Diphosphoglycerat im Erythrozyten vor und hat eine wichtige Funktion bei der Regulation des Sauerstofftransports. Desoxyhämoglobin (ohne Sauerstoff) bindet 2,3-DPG, wodurch die Sauerstoffaffinität stark sinkt. Unter den alkalischeren Verhältnissen in der Lunge dissoziiert 2,3-DPG vom Hämoglobin ab, wodurch die Affinität für die Beladung mit O₂ ansteigt. Der 2,3-DPG-Gehalt sinkt in älteren Blutkonserven, Desoxyhämoglobin enthält davon entsprechend weniger und hat den Sauerstoff viel fester gebunden. Bereits 1954 wurde erstmals festgestellt, daß sich die Sauerstoff-Dissoziationskurve bereits nach 1 Woche nach links verschiebt, so daß diese Erythrozyten im Gewebe nicht dieselbe Menge Sauerstoff freisetzen wie frisch entnommene. Nach Transfusion normalisiert sich diese Linksverschiebung im Verlauf von 24-48 Stunden. Die Linksverschiebung wurde als Folge des Versagens des Glycid-Stoffwechsels gedeutet, der sich in einer Verminderung des reduzierten Glutathions ausdrückt. Reduziertes Glutathion entsteht unter Mitwirkung von Glutathion-Reduktase und NADPH. In der Folge zeigt es sich, daß o.g. Linksverschiebung während der Lagerung mit dem Verlust von 2,3-DPG einhergeht. Im CPD-Blut zeigt sich im Vergleich zum ACD-Blut eine geringer ausgeprägte Linksverschiebung der Dissoziationskurve; dies geht mit einem höheren 2-DPG-Spiegel einher. Der ATP-Gehalt der Erythrozyten vermindert sich mit der Lagerung und parallel dazu stellen sich Lipidverlust der Zellmembranen, Sphärrozytose und ein Anstieg der Rigidität der Zellen ein. Die normale Lebensfähigkeit der Erythrozyten nach der Übertragung in den Empfängerorganismus ist der wichtigste Parameter an welchem der Erfolg der Lagerung von Blut gemessen werden kann. Als Maß für den Wert der Erythrozytenkonservierung wird heute der Prozentsatz der Erythrozyten angegeben, der länger als 24 Stunden im Empfängerkreislauf überlebt. Die z.Z. gültigen Regelungen über Konservierungslösungen und Lagerbedingungen verlangen, daß mindestens 70% der transfundierten Zellen nach 24 Stunden im Empfängerkreislauf nachweisbar sein müssen. Eine erniedgrigte Aggregationsbereitschaft der Erythrozyten (Rouleau-Bildung) in Abhängigkeit von der Lagerungszeit ist auch in vitro nachzuweisen. Während die Lagerungszeit keinen Einfluß auf die Blutgruppenmerkmale ABO und Rh hat, wurde mit fortschreitendem Alter der Konserve ein Reaktivitätsverlust der Blutgruppenmerkmale Lewis und P beschrieben. Eine wichtige Voraussetzung für die Blutkonservierung ist die Verhinderung der Blutgerinnung (Stangel W., in: Transfusionsmedizin, Mueller-Eckehardt C. (Hrsg.) Springer Verlag, S. 204-229 1988). Dies wird heute durch eine Mischung von Natriumzitrat und Zitronensäure erreicht. Untersuchungen zeigten auf, daß bei einer **Temperatur von 4°C** und bei einem **ph von zwischen 6,8 und 7,2** der ATP-Spiegel stabil bleibt. Deshalb konnte mit der Einführung einer mit Zitronensäure angesäuerten Glukose-Zitratlösung die Verfallszeit einer Blutkonserve auf 21 Tage verlängert werden. Zur Stabilität des ph-Wertes werden **Konservierungslösungen (Stabilisatoren)** eingesetzt, die bei ACD-Konserven einen ph von 7,0-7,1 und bei CPD- und CPDA-1-Konserven von 7,1-7,2 aufweisen. Im Bereich der Klinik wird zur Zeit CPDA₁ und SAG-M als Stabilisatorlösungen verwendet, die auch bei den Untersuchungen der Patentanmelder eingesetzt wurden.

Es sind weitere Stabilisatorlösungen bekannt, die sich zu den o.g. durch abweichende Konzentrationen der gleichen Inhaltsstoffe oder durch geringfügig veränderte Zusammensetzungen unterscheiden (s. Tab.1, aus: Meryman et al., In: Smit Sibinga C. Th., Das P.C., Merymam H. T. (eds); Kluwer Academic Publishers, Dodrecht, S. 111-117, 1990):

| Composition of red cell suspending solutions, mM. | | | | | | |
|---|---|---|---|---|---|---|
| **CPDA-1** | | **ADSOL** | **Nutricell** | **ARC6** | **ARC9C** | **ARC8** |
| NaCl | | 154.0 | 70.1 | | | |
| Adenine | 2.0 | 2.0 | 2.2 | 2.0 | 2.0 | 2.0 |
| Glucose | 161.0 | 11.0 | 55.0 | 110.0 | 177.0 | 138.0 |
| Mannitol | | 41.2 | | | | |
| NaCitrate | 89.6 | | 20.0 | 17.9 | 27.2 | 33.3 |
| Citric acid | 15.6 | | 2.0 | | | |
| NaH2PO4 | 16.1 | | 20.0 | 14.7 | | 3.26 |
| Na2HPO4 | | | | 25.8 | 20.0 | 11.6 |
| NH4Cl | | | | 50.0 | | |
| pH | 5.7 | 5.5 | 5.8 | 7.1 | 7.5 | 7.4 |
| Osmolality | 323 | 342 | 244 | 199 | 121 | 126 |

This table summarizes the composition of solutions referred to in the text. Osmolality is presented in milliosmoles and refers only to the non-penetrating consitutents, glucose being assumed to penetrate the red cell [12].

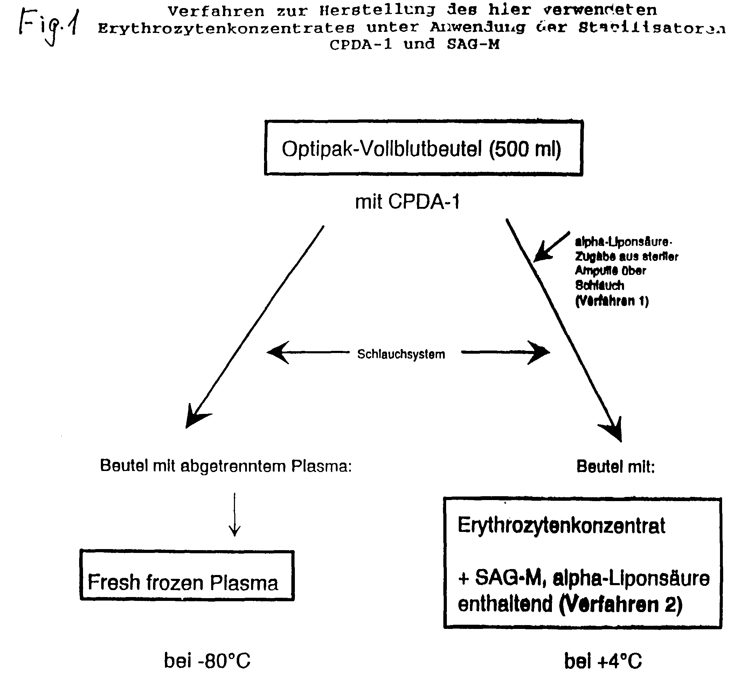

Neben der Lösung CPDA-1 kommt in Zusammenhang mit der vorliegenden Erfindung die **Stabilisatorlösung SAG-M** zur Anwendung: mg/100ml a.q.dest Siehe auch Fig. 1 Verfahren zur Herstellung des hier verwendeten Erythrozytenkonzentrates unter Anwendung der Stabilisatoren CPDA-1 und SAG-M:

| | |
|---|---|
| Ausgangswert für pH für Blutkonserve | 7,42 |
| NaCI | 877 |
| Glukoseanhydrid | 819 |
| Adenin | 6,9 |
| Mannitol | 525 |

Für dermaßen behandelte Erythrozytenkonzentrate wird eine mögliche **Lagerzeit** mit 35 Tagen angegeben. Bei Erythrozytenkonzentraten wird von der American Association of Blood Banks für diese Lagerzeit ein Hämatokrit von unter 80% gefordert (Stangel W., in: Transfusionsmedizin, Mueller-Eckhardt C. (Hrsg.); Springer Verlag, S. 204-229, 1988).

Bei den **Kryo-Verfahren** werden Erythrozyten-Konzentrate wie oben beschrieben hergestellt und dann mit kryoprotektiven Substanzen (Glyzerin für klinische Anwendung) versetzt, bei -196°C tiefgefroren und dann bei -80°C gelagert (Sputtek, A. and Körber, C.: Cryopreservation of red blood cells, platelets, lymphocytes, and stem cells. In: Fuller,B.J. and Grout, B.W.W., Clinical applications of cryobiology. CRC Press, Inc.; Int. Standard Book Number 0-8493-5429-3; p 95-135, 1991). Bei einer zur Zeit in Prüfung befindlichen neuen Entwicklung wird Hydroxylaethylstärke als Kryoprotektans eingesetzt (Lagerung in der Stickstoff-Gasphase bei -120 bis -140°C (Langer et al., in: Klinische Mikrozirkulation und Hämorheologie. Hrsg.: H. Landgraf, F. Jung, A. M. Ehrly, Backwell Wissenschaft Berlin, S. 233-239, 1993, und Sputtek et al., Infusionstherapie 19, S. 269-275, 1992).

Nach standardisierten Methoden gewonnenes humanes Spenderblut wird in automatisierten Verfahren in die beiden Komponenten **"Erythrozyten-Konzentrat (4°C)"** und **"Fresh-frozen-plasma"** aufgetrennt. Das dafür verwendete Optipress-System separiert Thrombozyten und Leukozyten.

Die Bevorratung von Blutkonserven zur Gewährleistung einer ausreichenden Versorgung im Rahmen operativer Eingriffe bzw. Notfällen bringt alte, gleichwohl sehr aktuelle und längst nicht befriedigend gelöste Probleme mit sich. Neben der Langzeitstabilität bzw. Funktionalität konservierter Erythrozyten kommt **nach Transfusion** dem hypoxischen und ischämischen Empfängerorganismus eine hohe Bedeutung zu. **Bei Konservierung** von Erythrozyten kommt es auch zur Peroxidation von Membranlipiden und Struktur- bzw. Funktionsproteinen, die in Funktionsstörungen bis hin zur Hämolyse münden.
Eine Lagerung von Blut bringt also eine Schädigung der roten Blutkörperchen mit sich, die sich in ihrer Funktionsverschlechterung (z.B. Sauerstoffabgabe, Lebensdauer und Fließfähigkeit der Erythrozyten) äußert. Von großer Bedeutung ist das für Patienten, die eine Bluttransfusion benötigen, und bedeutet einen Mehraufwand für die Blutspende, Blutgewinnung, und für die Kosten der Lagerung.
Durch diverse Waschschritte und durch das Frier-Tauverfahren entstehen erhebliche Störungen des Ionen- und Wasserhaushaltes sowie eine Reduzierung im ATP- und 2,3-DPG-Gehalt. Daraus folgt ein Anstieg der Hämolyserate (Sputtek et al., Infusionstherapie 19, S. 279-282, 1992; Langer et al., Infusionstherapie, 1994) und zur Verschlechtung der Viskoelastizität des Blutes (Langer et al., in: Klinische Mikrozirkulation und Hämorheologie. Hrsg.: H. Landgraf, F. Jung, A. M. Ehrly, Backwell Wissenschaft Berlin, S. 233-239, 1993). Funktionseinschränkungen der Erythrozyten und Strukturschädigungen sind unter anderem auf Peroxidation von Membranlipiden zurückzuführen, die z.B. anhand von Malondialdehyd gemessen werden können (Pfafferot et al., Blood, 59, S. 12-15, 1982).

Es bestand daher die Aufgabe, die Konservierung homologer und autologer Erythrozytenkonzentrate für den klinischen Bedarf zu verbessern.

Diese Aufgabe wurde erfindungsgemäß durch die Verwendung von α-Liponsäure und/oder ihren Enantiomeren, und/oder ihren Derivaten als Zusatz bei Erythrozyten-Flüssigkonserven für homologe und autologe Erythrozyten-Konzentrate oder als Zusatz bei Erythrozyten-Kryokonserven für homologe und autologe Erythrozytenkonzentrate gelöst. Dabei ist sowohl der Zusatz bei Erythrozyten-Flüssigkonserven bei 4°C für homologe und autologe Erythrozyten-Konzentrate als auch die Verwendung von α-Liponsäure und/oder ihren Enantiomeren, und/oder ihren Derivaten als Zusatz bei Erythrozyten-Kryokonserven für homologe und autologe Erythrozytenkonzentrate
a) für die Anwendung bei - 70°C bis -90°C (Glyzerin-Methode) und
b) bei Flüssigstickstoff -196°C/-140°C (Gasphase, Haes-Methode)
Gegenstand der Erfindung .
Es ist ferner Gegenstand einer vorteilhaften Ausgestaltung der Erfindung, wenn D,L-α-Liponsäure und/oder ihren Enantiomeren, und/oder ihren Derivate als Zusatz bei Erythrozyten-Kryokonserven für homologe und autologe Erythrozytenkonzentrate verwendet wird, die mit Hydroxyaethylstärke (HAES) behandelt wurden und anschließend nach Auftauen mit einem Cell-(Blood)-Saver weiterverarbeitet werden.
Mit diesem zusätzlichen Verfahren wird Zelldetritus (auch freies Hämoglobin) entfernt und ein einwandfreies Erythrozytenkonzentrat gewährleistet.
Die Anwendung dieser vorteilhaften Version kann sowohl bei der Gycerin- als auch bei der Haes -Methode erfolgen.(s.o.)

Nach der Erfindung beträgt die bevorzugte Konzentration im Blutbeutel 10µM bis 1mM D,L-α-Liponsäure und/oder ihren Enantiomeren und/oder ihrer Derivate besonderers bevorzugt 100 µM.

Als Derivate im Sinne der Erfindung sind Dihydroliponsäure, Metabolite wie (6,8-Bisnor-tetraliponsäure; Tetranorliponsäure und die Salze sowie Ester und Amide der D,L- α-Liponsäure zu betrachten.
Die Herstellung des erfindungsgemäß verwendeten Erythrozytenkonzentrates unter Anwendung der Stabilisatoren CPDA-1 und SAG-M ist in Fig. 1 schematisch dargestellt.

Das erfindungsgemäße Verfahren zeigt folgende wesentliche Merkmale bzw. Vorteile :
1. Verbesserung der Erythrozytenfunktionalität anhand verbesserter Viskoelastizität und gestiegenem 2,3-DPG-Gehalt
2. Verlängerung der Erythrozytenlebensdauer unter Lagerung
3. Verlängerung der Lagerungsdauer
4. Wiederherstellung der normalen Erythrozytenfunktion

Durch Zugabe von α-Liponsäure und/oder ihren Enantiomeren, und/oder ihren Derivaten vor Lagerung der Erythrozyten-Flüssigkonserven (bei 4°C) für homologe und autologe Erythrozyten-Konzentrate sowie bei Erythrozyten-Kryokonserven für die Anwendung bei - 70°C bis -90°C und bei Flüssigstickstoff - 196°C/-140°C (Gasphase) für homologe und autologe Erythrozytenkonzentrate werden oben genannte Vorteile der Erfindung erreicht.
Einerseits wird durch die erfindungsgemäße **Zugabe von α-Liponsäure** und/oder ihren Enantiomeren, und/oder ihren Derivaten **vor Lagerung** der Blutkonserven oben genannter Vorteil erreicht, andererseits liegt die Neuheit neben dem beschriebenen Verfahren in der Verwendung der oben genannten Stoffe. Unter den Begriff Derivate fallen nach der Erfindung insbesondere auch Dihydroliponsäure, Metabolite (6,8-Bisnortetraliponsäure; Tetraliponsäure) und die Salze der α-Liponsäure sowie deren Ester und Amide.

### Methode

Die hier gewonnen Ergebnisse wurden mit humanen Erythrozyten erreicht, indem nach dem oben beschriebenen Stand der Technik für Blut und Blutbeutel verfahren wurde.

Zum Nachweis der Wirksamkeit von D,L-α-Liponsäure und/oder ihren Enantiomeren, und/oder ihren Derivaten wurde neben biochemischen Nachweiseverfahren die spezifische Methode der sinusoidalen oszillierenden Kapillar-Rheometrie verwendet (Chmiel H. et al., Biorheology, 27, S. 883-894 (1990). Die Messung des viskoelastischen Fließverhaltens von Blut als modernstes Verfahren wird zur Bestimmung von pathologischen Veränderungen der Erythrozyten in der Klinischen Hämorheologie (z.B. bei arterieller Verschlußkrankheit, Schlaganfall und allgemein bei peripheren Gefäßkrankheiten) eingesetzt.

Zur Bestimmung der **Viskoelastizität** werden dynamisch rheologische Experimente durchgeführt, in denen zeitabhängig die Deformation und der Scher-Streß gemessen werden (sinusoidale oszillierende Scherversuche). Blut als nichtlineare viskoelastische Flüssigkeit zeigt eine Abnahme von η' und η" bei ansteigender Amplituden der Scherung.

Für die hier unter "Beispiele" aufgeführten Messungen wurde das Oszillierende Kapillar-Rheometer, OCR-D (A. Paar, Graz, Austria) verwendet, bei dem die Methode auf einer gleichzeitigen Bestimmung der Volumenflußrate und des Druckgradienten entlang einer Glaskapillare mit rundem Querschnitt beruht. Die Viskoelastizität kann so zwischen elastischen (Energiespeicherung) und viskösen (Energieverbrauch) Deformationen unterscheiden. Ansteigende Werte von η" beschreiben stärkere Aggregatbildung und rigidere Zellen mit Bildung von zunehmend elastischeren Erythrozyten (weniger flexibel) mit Bildung von Aggregaten, die zu Störungen des Blutflußes in der Mikrozirkulation führen. Diese Eigenschaften sind verknüpft mit der Beschaffenheit der Zellmembran und den "bridging"-Mechanismen, die zu der o.g. Rouleaux-Bildung führen. Die Abnahme von η' bei höheren Scherraten kann von veränderten Orientierungen und Verlängerung der Erythrozyten sowie von einer Reduzierung der Energieverbrauchs herrühren. η' ist nicht nur vom Hämatokrit und der Plasmaviskosität abhängig, sondern auch vom Aggregationsverhalten und der elastischen Eigenschaft der Membran

Die Wirkung der hier verwendeten Stoffe zeigt sich in den Blutkonserven folgendermaßen:
**A Erythrozytenkonzentrate**
   1. Der alterungsbedingte Anstieg der Blutviskosität **(dynamische Komponente µ')** wurde nahezu vollständig unterdrückt, während das Kontrollblut mit zunehmender Lagerungsdauer immer zähflüssiger wird. Die Viskosität oben genannter Stoffe blieb auf dem Wert eingefroren, der nach 15 Tagen bestand (der Unterschied zur Kontrolle kann 10% und mehr betragen, was einer 100%igen Kompensation der alterungsbedingten Verschlechterung entspricht).
   2. Die **elastische Komponente der Blutviskosität** (µ") beschreibt die elastischen Eigenschaften der Blutzellen. Mit zunehmendem Alter der Blutkonserve erhöht sich die elastische Komponente der Blutviskosität, was eine Erhöhung der Gesamtviskosität zur Folge hat. Bei diesem Parameter lagen die relativen Unterschiede zur Kontrolle bei 20% und eine altersbedingte Verschlechterung der Zellfluidität wurde vollständig kompensiert. Dadurch kommt die zellgebundene Wirkung von α-Liponsäure zu Bedeutung.
   3. Anstieg von 2,3-DPG (Diphosphoglyzerat) um 50% nach 50 Tagen.
   4. Der Einsatz hier verwendeter α-Liponsäure hat in jahrzehntelanger Anwendung als Medikament in anderen Indikationen seine gute Vertäglichkeit bewiesen. Andere Substanzen zum Schutz gegen oxidativen Stress unter Lagerungsbedingungen sind weniger effektiv und mit Nebenwirkungen für Patienten nach Bluttransfussion verbunden (Knight, J.A. et al., Transfusion, 32, S. 354-357 (1992). Der bereits bekannte antioxidative Effekt von α-Liponsäure hatte für alle Formen eine ungefähr 20%ige Reduktion von Malondialdehyd zur Folge. (Halbierung des Schadens)
B Kryokonserven
   1. Die Werte der **Erythrozytenaggreabilität** in der Kontrollgruppe entsprachen nach Auftauen und Resuspension denen nach 15 Tagen Flüssigkonservierung. Durch Zugabe unserer o.g. Stoffe wurden bei kryokonservierten Stoffen signifikant höhere Werte (um 33%), also eine Angleichung an den Normalbereich erreicht. Die Malondialdehyd- und Viskoelastizitäts-Wirkung ist die gleiche wie bei A.

### Vorteile der Neuentwicklung

- Lagerungs- bzw. alterungsbedingte **Veränderungen** zellulärer Strukturen und strukturbezogener Funktionen (Blutviskosität und Zellfluidität) können vermindert, bzw. ganz vermieden werden. Die Wirkung ist noch deutlicher, wenn o.g. Stoffe möglichst früh (vor Lagerung) und damit vor dem Schadenseintritt eingesetzt werden (Priming).
- Es zeigte sich ferner, daß solche **Priming-Effekte** auch während der Resuspension und Inkubation im autologen Plasma (=Simulation der Retransfusion) fortwirken.
- Die Wirkung o.g. Stoffe behielt ihre Reaktivität über lange **Lagerungszeiten (60 Tage)** und selbst **nach** einem **Frier-Tau-Prozeß** erhalten.
   Anstieg von 2,3-DPG, verbesserte Viskoelastizität, als Zusatz nicht toxisch.
- Die **Möglichkeit** Blut länger zu lagern, verbessert die Versorgung der Bevölkerung, weil Blutkonserven nach dem Stand der Technik ungefähr nach 35 Tagen verworfen werden müssen (begrenzte Menge Spenderblut). Damit werden die Blutspendedienste entlastet und die Versorgung angeschlossener Krankenhäuser mit Blut (Kostenreduktion) verbessert.
- Die **Verträglichkeit von α-Liponsäure** als physiologische Substanz

### Beispiele

Fall 1: Erythrozyten-Konzentrate (s. oben)
Fall 2: Kryokonservierte Erythrozyten (s. oben)

## Patentansprüche

1. Verfahren zur Lagerung von Erythrozyten, umfassend die Schritte:
a) Behandeln der Erythrozyten mit D,L-α-Liponsäure und/oder ihren Enantiomeren, und/oder ihren Derivaten und
b) Lagern der nach Schritt a) behandelten Erythrozyten

2. Verfahren nach Anspruch 1, wobei die Lagerung bei 4°C stattfindet.

3. Verfahren nach Anspruch 1, wobei den nach Schritt a) erhaltenen Erythrozyten vor der Lagerung Glycerin in einer zur Kryoprotektion der Erythrozyten ausreichenden Menge zugegeben wird und die Lagerung bei - 70°C bis -90°C stattfindet.

4. Verfahren nach Anspruch 1, wobei den nach Schritt a) erhaltenen Erythrozyten vor der Lagerung Hydroxyaethylstärke in einer zur Kryoprotektion der Erythrozyten ausreichenden Menge zugegeben wird und die Lagerung bei -140°C bis -196°C stattfindet.

5. Verfahren nach Anspruch 1, wobei die Behandlung und Lagerung im Blutbeutel stattfindet und die D,L-α-Liponsäure und/oder ihre Enantiomeren, und/oder ihre Derivate in einer Konzentration von 10 µM bis 1 mM im Blutbeutel zugegeben werden.

6. Verfahren nach Anspruch 1, wobei die Derivate Dihydroliponsäure, 6,8-Bisnor-tetraliponsäure; Tetranorliponsäure und die Salze der D,L-α-Liponsäure sowie deren Amide und Ester sind.

## Claims

1. Process for the storage of erythrocytes, comprising the steps:
a) treatment of the erythrocytes with D,L-α-lipoic acid and/or its enantiomers, and/or its derivatives and
b) storage of the erythrocytes treated according to step a)

2. Process according to Claim 1, where the storage takes place at 4°C.

3. Process according to Claim 1, where glycerol in an amount adequate for the cryoprotection of the erythrocytes is added to the erythrocytes obtained according to step a) before storage and the storage takes place at -70°C to -90°C.

4. Process according to Claim 1, where hydroxyethyl starch in an amount adequate for the cryoprotection of the erythrocytes is added to the erythrocytes obtained according to step a) before storage and the storage takes place at -140°C to -196°C.

5. Process according to Claim 1, where the treatment and storage takes place in a blood bag and the D,L-α-lipoic acid and/or its enantiomers, and/or its derivatives are added to the blood bag in a concentration of 10 µM to 1mM.

6. Process according to Claim 1, where the derivatives are dihydrolipoic acid, 6,8-bisnortetralipoic acid; tetranorlipoic acid and the salts of D,L-α-lipoic acid and its amides and esters.

## Revendications

1. Procédé de conservation d'érythrocytes comprenant les stades de :
a) traitement des érythrocytes avec l'acide D,L-α-lipoïque et/ou ses énantiomères et/ou ses dérivés et,
b) conservation des érythrocytes traités selon le stade a).

2. Procédé selon la revendication 1,
dans lequel
la conservation a lieu à 4°C.

3. Procédé selon la revendication 1,
dans lequel
- on ajoute aux érythrocytes obtenus selon l'étape a) avant la conservation, du glycérol en quantité suffisante pour la cryoprotection des érythrocytes, et
- la conservation a lieu à -70°C à -90°C.

4. Procédé selon la revendication 1,
dans lequel
- on ajoute aux érythrocytes obtenus selon l'étape a) avant la conservation, de l'hydroxyéthylamidon en quantité suffisante pour la cryoprotection des érythrocytes, et
- la conservation a lieu à -140°C à -196°C.

5. Procédé selon la revendication 1,
dans lequel
- le traitement et la conservation s'effectuent dans une poche de sang, et
- l'acide D,L-α-lipoïque et/ou ses énantiomères et/ou ses dérivés sont ajoutés à une concentration de 10 µm à 1 mM dans la poche de sang.

6. Procédé selon la revendication 1,
dans lequel
les dérivés sont l'acide dihydrolipoïque, l'acide 6,8-bis tétralipoïque, l'acide tétranorlipoïque et les sels de l'acide DL-α-lipoïque, ainsi que leurs amides et esters.
